# EUROPÄISCHE PATENTSCHRIFT

(11) **EP 2 121 374 B1**
(45) Veröffentlichungstag und Bekanntmachung des Hinweises auf die Patenterteilung: **29.09.2010**
(21) Anmeldenummer: 08706975.3
(22) Anmeldetag: 09.01.2008
(51) Int. Cl.: B60N 2/01, B60N 2/24, B60N 2/30, B60R 22/12, B60R 22/26, B64D 11/06

(54) **MIT EINEM SCHULTERGURTZEUG VERSEHENER SICHERHEITSSITZ OHNE SEITENEINBAUTEN**
SAFETY SEAT PROVIDED WITH A SHOULDER BELT HARNESS AND WITHOUT LATERAL FITTINGS
SIÈGE DE SÉCURITÉ SANS ACCESSOIRES LATÉRAUX, MUNI D'UN HARNAIS DE SÉCURITÉ

(30) Priorität: 16.01.2007 DE 102007002371
(43) Veröffentlichungstag der Anmeldung: 25.11.2009
(73) Patentinhaber: AUTOFLUG GMBH, 25462 Rellingen (DE)
(72) Erfinder: HANSEN, Holger, 20357 Hamburg (DE)
(74) Vertreter: Müller, Karl-Ernst
(86) Internationale Anmeldenummer: PCT/EP2008/000111
(87) Internationale Veröffentlichungsnummer: WO 2008/086967

(56) Entgegenhaltungen:
- EP-A- 1 398 205
- EP-A- 1 593 542
- WO-A-98/10682
- DE-B3-102004 062 350
- FR-A- 622 622
- US-A- 4 005 765
- US-A- 4 474 347

## Beschreibung

Die Erfindung betrifft einen Sicherheitssitz für Land-, Luft- und Seefahrzeuge mit einem Sitzteil, welches an einem fahrzeugseitig befestigten und wenigstens zwei vertikale Haltegurte aufweisenden Gurtgerüst festgelegt ist, wobei das Sitzteil aus einem Rohrrahmen mit einer davon getragenen textilen Sitzfläche besteht.

Ein Sicherheitssitz mit den vorgenannten Merkmalen ist aus der DE 10 2004 062 350 B3 bekannt. Hierbei ist die Sitzschale jeweils an vertikal zwischen dem Fahrzeugdach und dem Fahrzeugboden aufgespannten Haltegurten befestigt, indem die Sitzschale mittels zusätzlich angeordneter, mit den vertikalen Haltegurten verbundener und mit diesen ein Gurtgerüst zur Halterung der Sitzschale bildender seitlicher Traggurte an den vertikalen Haltegurten festgelegt ist. Dabei bestehen die seitlichen Tragegurte aus einem von einer unteren ortsfesten Befestigungsstelle längs der Seitenränder der Sitzschale bis zu deren vorderen Eckpunkten verlaufenden Gurtabschnitten, wobei von den vorderen Eckpunkten der Sitzschale jeweils ein weiterer schräg zur Hochachse des Fahrzeugsitzes verlaufender Gurtabschnitt zu einer oberhalb liegenden ortsfesten Befestigungsstelle an dem zugeordneten vertikalen Haltegurt zurückgeführt ist. Somit ist die Sitzschale so in das aus vertikalen Haltegurten und Traggurten gebildete Gurtgerüst eingesetzt, dass die Sitzschale das Gurtgerüst selbsttätig aufspannt. Dabei ist nach einem Ausführungsbeispiel zusätzlich vorgesehen, dass an dem rückwärtigen Ende der Sitzschale ein Betätigungsseil zum Hochklappen der Sitzschale durch Anheben von deren rückwärtigem Ende angreift.

Für den in der DE 10 2004 062 350 B3 beschriebenen Sicherheitssitz ist kein gesondertes Gurtzeug zur Sicherung eines auf dem Sicherheitssitz sitzenden Insassen vorgesehen. Ferner ist mit dem bekannten Sicherheitssitz der Nachteil verbunden, dass die seitlichen Traggurte einen auf dem Sitz sitzenden Insassen seitlich einfassen, so dass der Insasse sich beim Aufstehen nur nach vorne erheben und sich auch nur aus einer vor dem Sitz stehenden Position heraus auf den Sitz setzen kann. Es kommen jedoch häufig Anwendungsfälle vor, bei denen eine Mehrzahl von Sitzen nebeneinander in einer in der Fahrtrichtung des Fahrzeuges ausgerichteten Reihe angeordnet sind, wobei die Insassen insbesondere beim Aussteigen seitlich über die nebeneinander angeordneten Sitze rutschen und das Fahrzeug vom letzten Sitz der Reihe aus verlassen.

Der Erfindung liegt daher die Aufgabe zugrunde, einen Sicherheitssitz mit den eingangs genannten Merkmalen so zu verbessern, dass der Sicherheitssitz bei einer nach wie vor gegebenen Halterung des Sitzteils an einem Gurtgerüst ein Schultergurtzeug aufweist, wobei seitlich des Sitzteils keine eine Bewegung des Insassen hindernden Einbauten vorhanden sein sollen.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass ein einen auf dem Sitzteil sitzenden Insassen sicherndes Schultergurtzeug vorgesehen ist, welches aus jeweils einem im Rückenbereich des Insassen zwischen einer lösbaren Befestigung am Dachbereich des Fahrzeuges und dem rückwärtigen Endes des Sitzteils vertikal verlaufenden Gurtabschnitt besteht, wobei die beiden Gurtabschnitte an dem Sitzteil umgelenkt und in einem kreuzweisen Verlauf die Sitzfläche des Sitzteils untergreifend bis zu einer im Bereich der Vorderkante des Sitzteils angeordneten Befestigung geführt sind und wobei das Schultergurtzeug ferner an den vertikalen Gurtabschnitten gehalterte, über die Schultern des Insassen bis zu einer im Bereich der Vorderkante des Sitzteils angeordneten lösbaren Befestigung geführte Schultergurte aufweist, die über eine im Brustbereich des Insassen angeordnete lösbare Querverbindung miteinander verbindbar sind. Mit einer derartigen Ausbildung des Schultergurtzeuges ist der Vorteil verbunden, dass sich aufgrund der jeweils unter der Sitzfläche des Sitzteils hindurchgeführten Gurtabschnitte ein geschlossenes Gurtsystem ergibt, welches den Insassen voll umschlingt und unabhängig von der Tragfähigkeit des Sitzteils wirken kann. Diese Anordnung ist besonders im Hinblick auf eine Minenansprengung unterhalb des Fahrzeugbodens wichtig, um den auf dem Sitz sitzenden Insassen von den auftretenden Kräften zu entkoppeln. Insofern übernimmt des Schultergurtzeug insbesondere bei einer Ausbildung der Sitzfläche als textile, aufgespannte Sitzfläche eine Tragfunktion für den Insassen, so dass es gegenüber dem Stand der Technik auf die Ausbildung der Sitzfläche im einzelnen nicht mehr ankommt. Weiterhin ist in vorteilhafter Weise das Schultergurtzeug so ausgestaltet, dass keine dauerhaften seitlichen Einbauten vorhanden sind, und dass die Gurtbandteile des Schultergurtzeuges jeweils von den entsprechenden Befestigungsstellen mit dem Fahrzeug oder dem Sitzteil lösbar sind, so dass das Schultergurtzeug jeweils angelegt und abgelegt werden kann.

Nach Ausführungsbeispielen der Erfindung kann vorgesehen sein, dass die Halterung der Schultergurte an den vertikalen Gurtbandabschnitten des Schultergurtzeuges und/oder die die Schultergurte verbindende Querverbindung an den Schultergurten verschiebbar eingerichtet ist, so dass eine Anpassung des Schultergurtzeuges an die jeweiligen Größenverhältnisse des Fahrzeuginsassen gegeben ist.

Nach einem Ausführungsbeispiel der Erfindung ist vorgesehen, dass in einer an sich bekannten Weise die lösbare Querverbindung als Gurtschloss mit einer in einen Schlosskörper einsteckbaren und darin lösbar verriegelbaren Schlosszunge ausgebildet ist.

Soweit die vertikalen Gurtabschnitte des Schultergurtzeuges gegebenenfalls den Zugang zu dem im Rückenbereich des Insassen befindlichen Ausrüstungsgegenständen versperren können, ist nach einem Ausführungsbeispiel der Erfindung vorgesehen, dass die Befestigung der vertikalen Gurtabschnitte mit dem Dachbereich als Schnelltrennkupplung ausgebildet ist.

Zum Anlegen beziehungsweise Ablegen der Schultergurte des Schultergurtzeuges ist nach einem Ausführungsbeispiel der Erfindung vorgesehen, dass die Befestigung der Schultergurte an dem Sitzteil im Bereich von dessen Vorderkante als Schnelltrennkupplung ausgebildet ist. Hierbei kann in einer alternativen Ausführungsform der Erfindung vorgesehen sein, dass die Schnelltrennkupplung gleichzeitig zur Befestigung des Endes des jeweils unter dem Sitzteil verlaufenden Gurtabschnitts eingerichtet ist.

Hinsichtlich der Halterung des Sitzteils an dem Gurtgerüst ist nach einem Ausführungsbeispiel der Erfindung vorgesehen, dass das sich mit seinem rückwärtigen Ende gegen die vertikalen Haltegurte des Gurtgerüstes abstützende Sitzteil zwei seitlich daran angeordnete, mit dem Sitzteil verbundene Stützen aufweist, die sich von ihrer von dem rückwärtigen Ende des Sitzteils beabstandeten Befestigung an dem Sitzteil in einem schrägen Verlauf unterhalb des Sitzteils zu den vertikalen Haltegurten des Gurtgerüsts erstrecken und mit ihren freien Enden in an in den vertikalen Haltegurten ausgebildeten Schlaufen eingehängt sind, und dass unterhalb des Sitzteils zwei längs der Seitenränder des Sitzteils von einer vorderen Befestigung am Sitzteil bis zu einer Verbindung mit den vertikalen Haltegurten verlaufende Spanngurte vorgesehen sind, deren Länge kürzer bemessen ist als der Abstand zwischen ihren vorderen Befestigungen am Sitzteil und dem sich gegen die vertikalen Haltegurte abstützenden rückwärtigen Ende des Sitzteils.

Mit dieser Halterung des Sitzteils an dem Gurtgerüst ist der Vorteil verbunden, dass das Sitzteil des Sicherheitssitzes vollständig an den unterhalb der Sitzfläche verlaufenden vertikalen Haltegurten eines entsprechend bereitgestellten Gurtgerüsts befestigt beziehungsweise gehaltert ist, so dass auf oberhalb der Sitzfläche liegende, insbesondere seitliche Einbauten zur Halterung des Sitzes verzichtet ist. Somit können sich die Insassen frei über eine Reihe von nebeneinander angeordneten Sicherheitssitzen bewegen.

Bei Verwirklichung einer derartigen Halterung wird das Sitzteil durch die bei Belastung des Sitzteils durch einen Insassen von den Stützen und den Spanngurten auf die vertikalen Haltegurte des Gurtgerüsts aufgebrachten, einander entgegen wirkenden Spannungen gehalten. So entsteht bei Belastung des Sitzteils eine Druckkraft, die über die mit dem Sitzteil verbundenen Stützen auf die vertikalen Haltegurte übertragen wird, so dass die Haltegurte von dem Sitzteil weg nach außen gedrückt beziehungsweise gespannt werden. Gleichzeitig üben bei Belastung des Sitzteils die Spanngurte aufgrund ihrer Längenbemessung an ihren Befestigungsstellen mit den vertikalen Haltegurten eine Zugkraft auf die Haltegurte aus, so dass sich das Sitzteil mit seinem rückwärtigen Ende unter Spannung gegen die vertikalen Haltegurte des Gurtgerüsts abstützt und sich zwischen den vertikalen Haltegurten, den Spanngurten und den Stützen verspannt.

Durch die auf das Sitzteil wirkende Belastung und aufgrund der in den jeweiligen vertikal ausgerichteten Haltegurten des Gurtgerüsts entstehenden Zug- und Druckkräfte wirken die Gurte des Gurtgerüsts einerseits als Spannelement für das Sitzteil, und andererseits auch als Stoßdämpfer, die eine direkte Krafteinleitung von fahrzeugbezogenen Vibrationen oder Stößen, beispielsweise resultierend von Minenansprengungen, deutlich mindern so dass diese nicht auf den auf dem Sitz sitzenden Insassen durchschlagen.

Nach einem Ausführungsbeispiel der Erfindung ist hinsichtlich der Ausgestaltung des Gurtgerüsts vorgesehen, dass das Gurtgerüst aus einem durch vier in einem Rechteck angeordneten, an einer Seitenstruktur des Fahrzeuges befestigten Verankerungen geführten Gurtband besteht, wobei das Gurtband mit den beiden vertikalen Haltegurten und mit zwei diagonal verlaufenden Kreuzgurten sowie mit einem horizontalen Quergurt ausgebildet ist und in den horizontalen Quergurt eine Spannvorrichtung für das Gurtgerüst eingeschaltet ist. Hiermit ist der Vorteil verbunden, dass dieses Gurtgerüst an einer Seitenstruktur des Fahrzeuges befestigt ist und insoweit zunächst einmal der Decken- und Bodenbereich von Einbauten freigehalten werden kann. Soweit häufig in entsprechenden Fahrzeugen, beispielsweise Truppentransportern seitlich ein durchgehender Radkasten ausgebildet ist, auf dessen Oberfläche Gepäck oder andere Ausrüstung abgelegt werden kann, kann das Gurtgerüst an der unteren Seitenwand des Radkastens angebracht werden. Damit ist die auf dem Radkasten liegende Ausrüstung zugänglich.

Im einzelnen kann vorgesehen sein, dass die beiden oberen fahrzeugfesten Verankerungen oberhalb des Sitzteils an der Seitenstruktur des Fahrzeuges befestigt sind.

Hinsichtlich einer zweckmäßigen Befestigung des Gurtgerüsts an dem Fahrzeug kann vorgesehen sein, dass die fahrzeugfesten Verankerungen als Ringschrauben ausgebildet sind, in die das Gurtband führend aufnehmende Karabinerhaken einklinkbar sind, wobei nach einem Ausführungsbeispiel die Verbindungen der Spanngurte mit den vertikalen Haltegurten des Gurtgerüsts als die Haltegurte umschließende, an den Spanngurten befestigte öffenbare D-Ringe ausgebildet sind.

Nach einem Ausführungsbeispiel der Erfindung ist vorgesehen, dass die Spanngurte längs der seitlichen Profile des Rahmens des Sitzteils verlaufen.

In einer zweckmäßigen Weise können die entsprechenden Sitzteile an den sie halternden Gurtgerüsten klappbar eingerichtet sein, wie dies grundsätzlich auch bei dem in der gattungsbildenden DE 10 2004 062 350 B3 beschriebenen Sicherheitssitz vorgesehen ist. Hierzu ist nach einem Ausführungsbeispiel der Erfindung vorgesehen, dass die zwischen den Stützen und dem Sitzteil bestehenden Befestigungen als Gelenkverbindungen ausgebildet sind derart, dass das Sitzteil durch Anheben seines rückwärtigen Endes um die Gelenkverbindungen hochklappbar ist. Dabei kann nach einem Ausführungsbeispiel der Erfindung vorgesehen sein, dass an dem Sitzteil ein elastisches Zugmittel angeschlagen und mit seinem freien Ende im Dachbereich des Fahrzeuges befestigt ist derart, dass das Sitzteil durch die von dem Zugmittel ausgeübte Spannung in der hochgeklappten Stellung gehalten und entgegen der Vorspannung in die Sitzposition zu bringen ist.

Nach einem Ausführungsbeispiel der Erfindung kann vorgesehen sein, dass im rückwärtigen Bereich des Sitzteils eine zwischen dem Dachbereich und dem Sitzteil aufgespannte Rückenstütze vorgesehen ist. Damit durch die Rückenstütze nicht der Zugang zu den hinter dem Insassen liegenden Ausrüstungsgegenständen versperrt wird, kann nach einem Ausführungsbeispiel vorgesehen sein, dass die Rückenstütze am Dachbereich des Fahrzeuges über lösbare Befestigungen gehaltert ist. Um das Entfernen der Rückenstütze im Einsatzfall zu erleichtern, kann vorgesehen sein, dass an dem lösbaren Ende der Rückenstütze elastische Zugmittel zur Verbringung der Rückenstütze in einen Staubereich befestigt sind.

Alternativ kann vorgesehen sein, das die Rückenstütze selbsttätig in einen am Fahrzeug befestigten Aufbewahrungskasten einziehbar und das freie Ende der Rückenstütze lösbar an dem Fahrzeugdach beziehungsweise dem Sitzteil befestigbar ist.

Nach einem Ausführungsbeispiel der Erfindung kann vorgesehen sein, dass die Rückenstütze mit einem Kopfstützenbereich versehen ist.

Im Hinblick auf die Ausbildung einer Sitzanordnung mit mehreren Sicherheitssitzen kann nach einem Ausführungsbeispiel der Erfindung vorgesehen sein, dass der Rahmen des Sitzteils wenigstens eine in seinen seitlichen Profilteilen angebrachte Bohrung zur Aufnahme einer mehrere Sicherheitssitze zu einer Reihe von Sitzen verbindenden Schraubverbindung aufweist.

In der Zeichnung sind Ausführungsbeispiele der Erfindung wiedergegeben, welche nachstehend beschrieben sind. Es zeigen:
- Fig. 1: eine Innenansicht eines Fahrzeuges mit einem an dessen Seiten- struktur aufgespannten Gurtgerüst,
- Fig. 2: den Gegenstand der Figur 1 mit einem an dem Gurtgerüst gehalterten Sitzteil,
- Fig. 3: den Gegenstand der Figur 2 in einer Seitenansicht,
- Fig. 4: den Gegenstand der Figur 3 mit einem zum Klappen des Sitzteils eingerichteten elastischen Zugmittel bei in der Sitzstellung befindlichem Sitzteil,
- Fig. 5: den Gegenstand der Figur 4 bei hochgeklapptem Sitzteil,
- Fig. 6: den Gegenstand der Figur 4 mit einem zusätzlich vorgesehenen Schultergurtzeug,
- Fig. 7: den Gegenstand der Figur 6 mit einer zusätzlichen Rückenstütze,
- Fig. 8: den Sicherheitssitz gemäß Figuren 1 bis 7 mit einer darauf sitzenden Person,
- Fig. 9: eine Reihe von drei nebeneinander angeordneten Sicherheitssitzen.

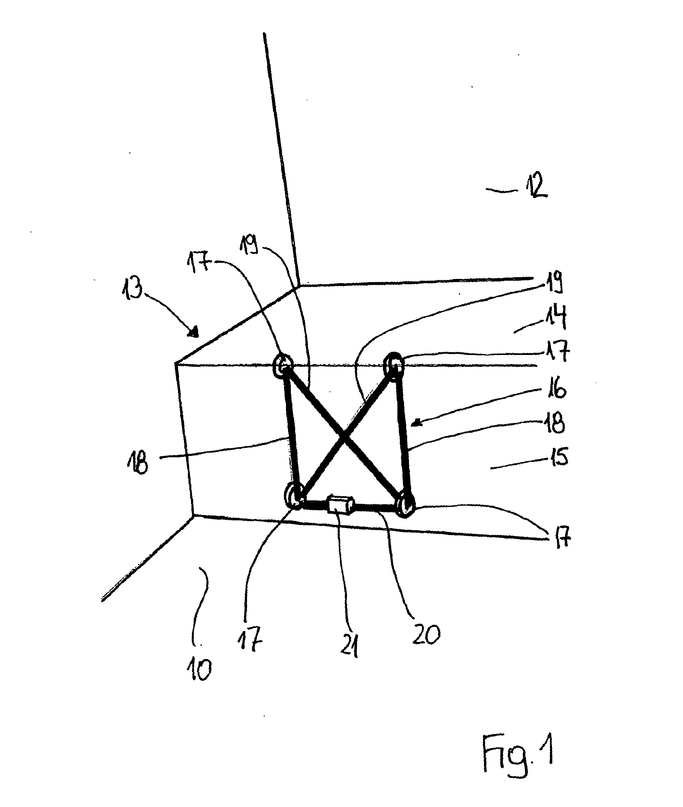

Wie sich aus Figur 1 ergibt, weist ein nur schematisch dargestelltes Fahrzeug einen Fahrzeugboden 10 sowie eine Seitenwand 12 auf, an der ein Radkasten 13 mit einer Oberfläche 14 und einer Seitenstruktur 15 ausgebildet ist. An der Seitenstruktur 15 ist ein Gurtgerüst 16 an vier in einem Rechteck angeordneten Verankerungen 17 aufgespannt, wobei das Gurtgerüst 16 zwei parallel verlaufende vertikale Haltegurte 18, zwei kreuzweise verlaufende Gurtabschnitte 19 und einen horizontalen Quergurt 20 aufweist, in welchen eine Spannvorrichtung 21 eingeschaltet ist. Wie im einzelnen nicht weiter dargestellt ist, können die fahrzeugfesten Verankerungen 17 als Ringschrauben ausgebildet sein, in welche das Gurtband des Gurtgerüstes 16 jeweils führend aufnehmende Karabinerhaken einklinkbar sind. Zur Montage des Gurtgerüstes 16 ist es lediglich erforderlich, das Gurtband derartig durch die fahrzeugfesten Verankerungen 17 zu führen, dass sich die aus Figur 1 ersichtliche Ausbildung des Gurtgerüstes 16 ergibt, wonach über die Spannvorrichtung 21 das Gurtgerüst 16 entsprechend vorgespannt wird.

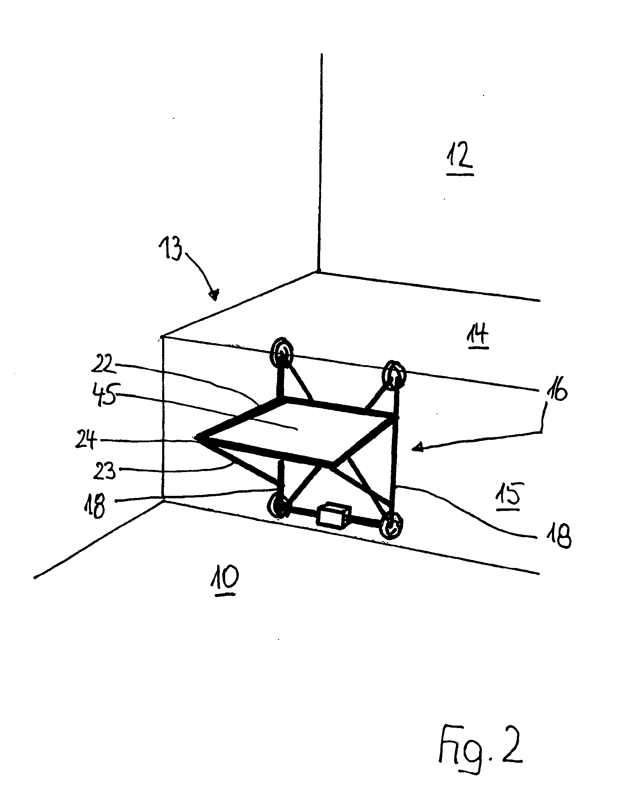

Wie sich aus Figur 2 ergibt, ist an dem Gurtgerüst 16 ein in der Sitzposition dargestelltes Sitzteil 22 gehaltert, welches als Profilgestellt mit einem umlaufenden Rahmen 24 und einer davon aufgespannten textilen Sitzfläche 45 besteht. Wie sich aus Figur 2 schematisch ergibt, ist das Sitzteil 21 über seitliche Stützen 23 gegen die vertikalen Haltegurte 18 des Gurtgerüsts 16 abgestützt.

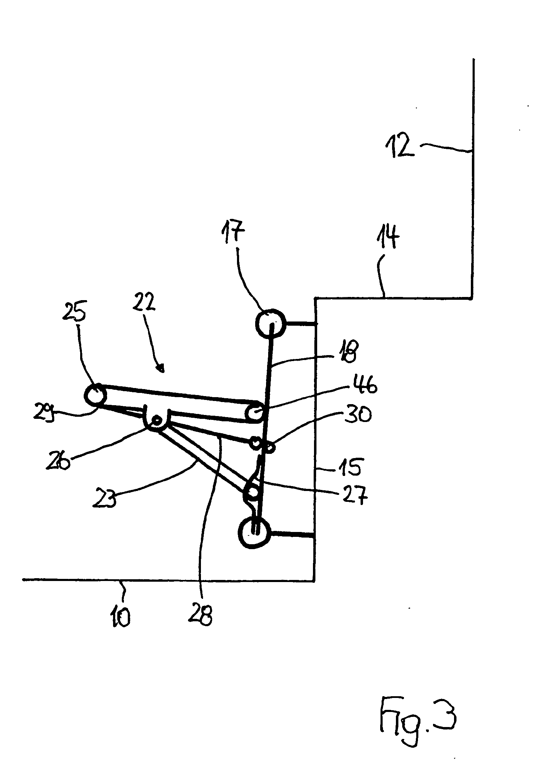

Diese Anordnung zur Halterung des Sitzteils 22 an dem Gurtgerüst 16 ist im einzelnen aus Figur 3 ersichtlich. Danach sind die Stützen 23 an den zugeordneten seitlichen Profilteilen 25 des Rahmens 24 mittels einer Gelenkverbindung 26 befestigt, so dass der Rahmen 24 des Sitzteils 22 gegenüber den Stützen 23 beweglich ist. Mit ihrem freien Ende sind die Stützen 23 in an den vertikalen Haltegurten 18 des Gurtgerüsts 16 ausgebildeten Schlaufen 27 festgelegt. Weiterhin sind unter den seitlichen Profilteilen 25 verlaufende Spanngurte 28 vorgesehen, die von einer vorderen Befestigung 29 an dem Rahmen 24 bis zu den vertikalen Haltegurten 18 des Gurtgerüsts 16 verlaufen und daran über die Haltegurte 18 umschließende, zu öffnende D-Ringe 30 festgelegt sind. Die Spanngurte 28 weisen dabei eine gegenüber dem Abstand zwischen ihren vorderen Befestigungen 29 an dem Rahmen 24 und dem sich gegen die vertikalen Haltegurte 18 abstützenden, durch ein entsprechendes Profilteil gebildeten rückwärtigen Ende 46 des Sitzteils 22. Die Anordnung von Stützen 23 und Spanngurten 28 führt dazu, dass bei Belastung des Sitzteils 22 durch einen darauf sitzenden Insassen die Stützen 23 Druckkräfte auf die vertikalen Haltegurte 18 ausüben, während gleichzeitig die Spanngurte 28 entsprechende Zugkräfte auf die vertikalen Haltegurte 18 ausüben, so dass durch diese einander entgegen gerichteten Spannkräfte eine sichere Halterung des Sitzteils 22 an den vertikalen Haltegurten 18 gegeben ist, ohne dass das Sitzteil 22 etwa wie im Stand der Technik durch dieses tragende, an oberen Verankerungen aufgehängte Gurte gehalten sein müsste.

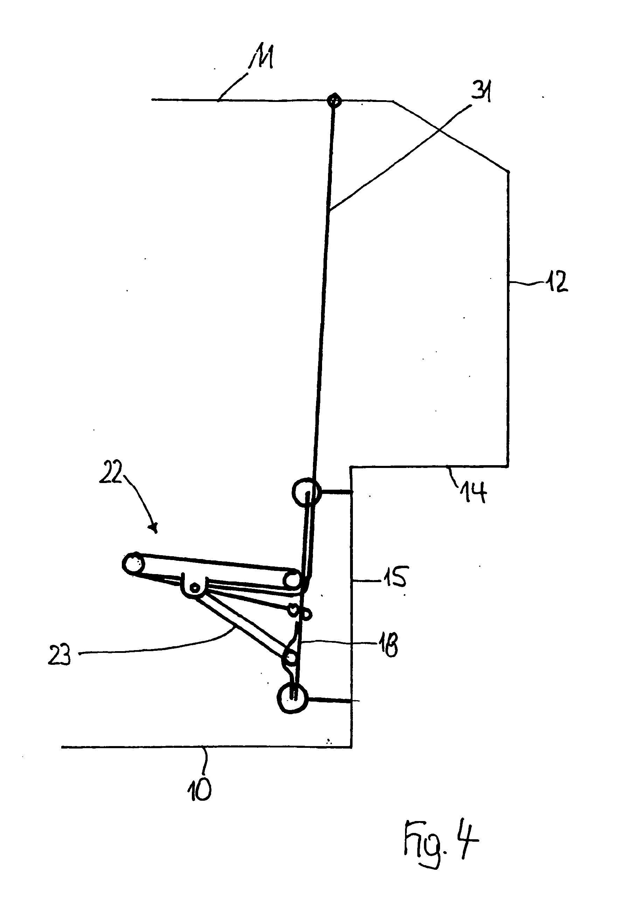

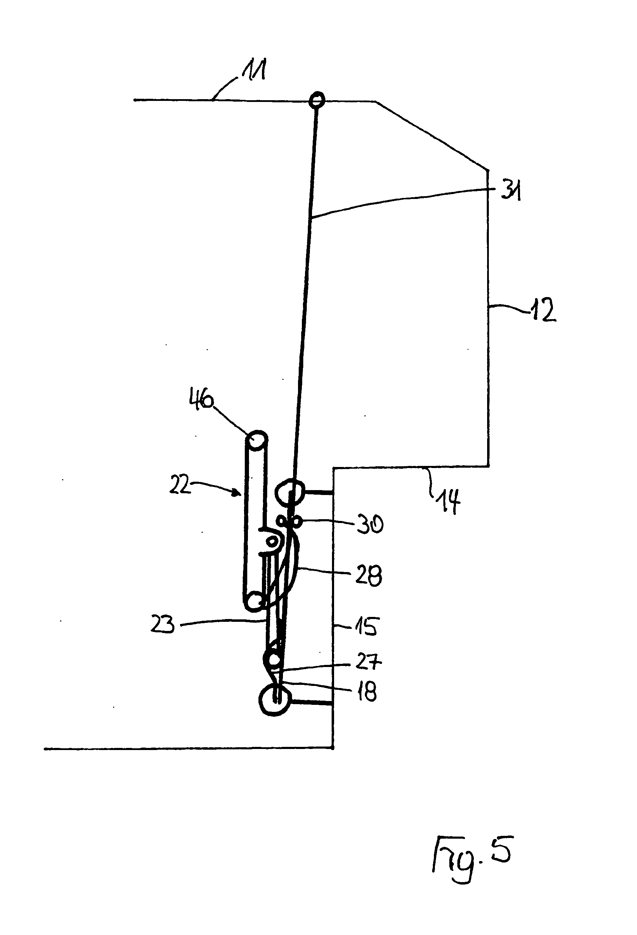

Wie sich aus Figur 4 ergibt, kann aufgrund der erfindungsgemäßen Halterung des Sitzteils 22 an dem Gurtgerüst 16 eine Klappbarkeit des Sitzteiles 22 in einfacher Weise eingerichtet sein, indem ein elastisches Zugmittel 31 mit seinem einen Ende am Fahrzeugdach 11 des Fahrzeuges angeschlagen und mit seinem anderen Ende im Bereich der Gelenkverbindung 26 mit dem Rahmen 24 des Sitzteils 22 verbunden ist derart, dass das Sitzteil durch die von dem Zugmittel ausgeübte Vorspannung in der hochgeklappten Stellung gehalten ist, wie dies aus Figur 5 ersichtlich ist. Zum Verbringen des Sitzteils 22 in die Sitzposition gemäß Figur 4 braucht lediglich das rückwärtige Ende 46 des Sitzteils 22 gegen die vertikalen Haltegurte 18 des Gurtgerüsts 16 heruntergedrückt zu werden, so dass sich die beschriebene Verspannung des Sitzteils 22 über die Stützen 23 und die Spanngurte 28 mit den vertikalen Haltegurten 18 ergibt.

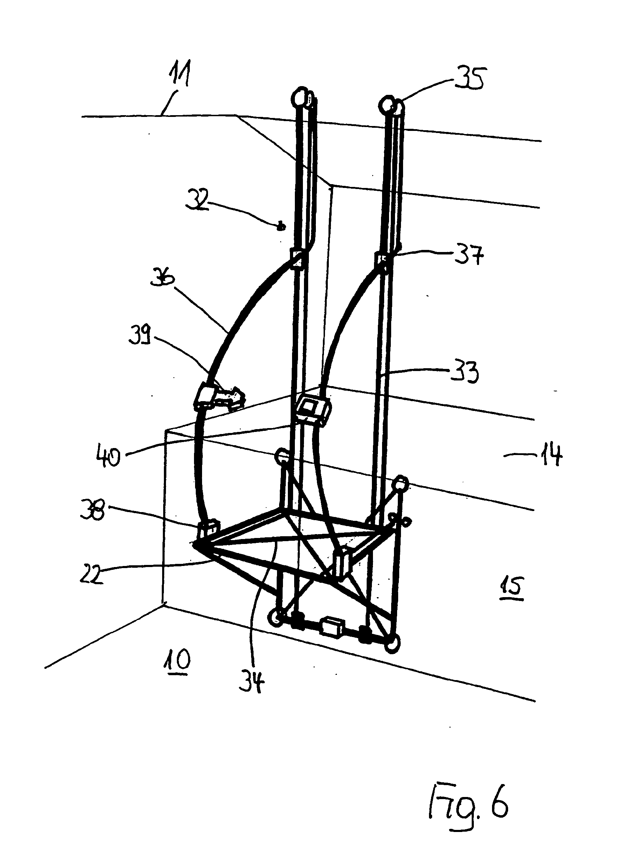

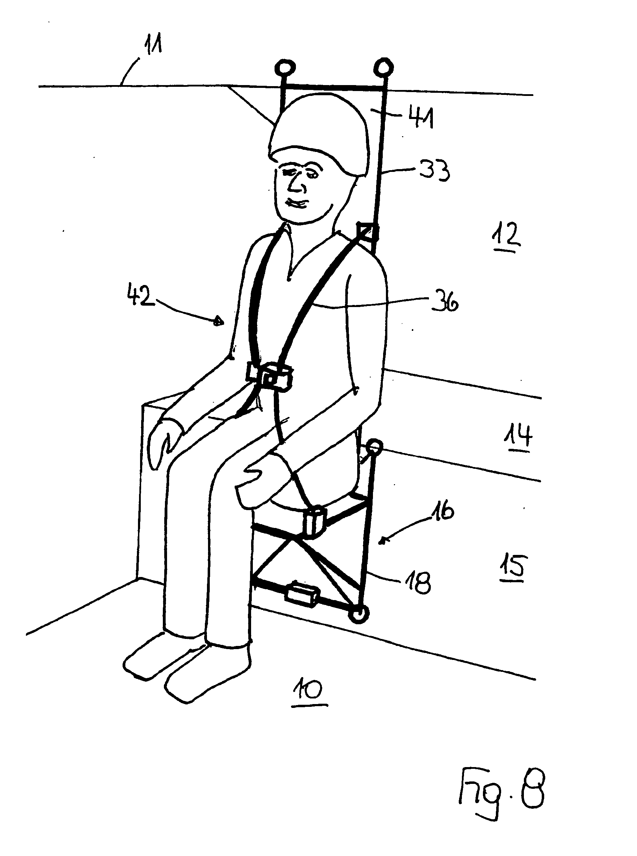

Das in den Figuren 1 bis 5 beschriebene Sitzteil reicht grundsätzlich zur Aufnahme der mit dem Fahrzeug zu befördernden Insassen aus, wobei in einer einfachen Ausführungsform zusätzlich ein einfacher Beckengurt vorgesehen sein kann, der beispielsweise ebenfalls an dem Gurtgerüst 16 oder den fahrzeugfesten Verankerungen 17 befestigt sein kann. Um jedoch die Zulassung für den Straßenverkehr für mit derartigen Sicherheitssitzen ausgerüstete Fahrzeuge zu erhalten, ist es erforderlich, ein Schultergurtzeug zur Sicherung des Insassen vorzusehen, welches weiterhin auf feste seitliche Einbauten verzichten soll. Ein solches Schultergurtzeug ist in Figur 6 dargestellt. Das Schultergurtzeug 32 besteht zunächst aus jeweils im Rückenbereich des Insassen angeordneten vertikal verlaufenden Gurtabschnitten 33, die mit ihrem einen Ende an einer lösbaren, vorzugsweise als Schnelltrennkupplung 35 ausgebildeten Befestigung am Fahrzeugdach 11 festgelegt sind, wobei die beiden vertikal verlaufenden Gurtabschnitte 33 an dem Sitzteil 22 beziehungsweise dessen rückwärtigen Ende 46 umgelenkt und in einem kreuzweisen Verlauf die Sitzfläche 45 des Sitzteils 22 untergreifend bis zu einer im Bereich der Vorderkante des Sitzteils 22 angeordneten Befestigung geführt sind. Zusätzlich weist das Schultergurtzeug 32 an den vertikalen Gurtabschnitten 33 gehalterte, über die Schultern eines in Figur 6 nicht dargestellten Insassen (vergleiche Figur 8) bis zu einer im Bereich der Vorderkante des Sitzteils 22 angeordneten, als Schnelltrennkupplung 38 ausgebildete Befestigung geführte Schultergurte 36 aufweist. Die Schultergurte 36 sind über eine im Brustbereich des Insassen angeordnete, lösbare Querverbindung miteinander verbindbar, wobei diese Querverbindung aus einem an dem einen Schultergurt 36 befestigten Gurtschloss und aus einer an dem anderen Schultergurt 36 befestigten Gurtzungen 39 besteht. Wie im einzelnen nicht dargestellt, können Gurtschloss 40 und Gurtzunge 39 längs der sie tragenden Schultergurte 36 verschiebbar eingerichtet sein, um eine Anpassung an die Größenverhältnisse zu ermöglichen. Soweit die Schultergurte 36 mit den vertikalen Abschnitten 33 des Schultergurtzeuges 32 verbunden sind, sind hierzu Schieber 37 vorgesehen, über die die Schultergurte 36 in ihrem Verlauf die Größe des angeschnallten Insassen anpassbar sind.

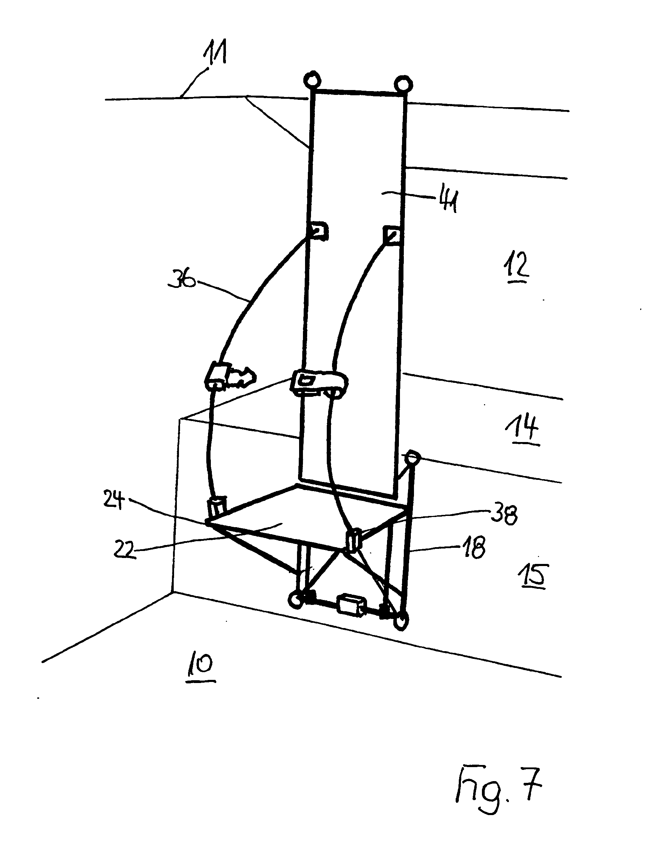

Wie sich aus Figur 7 ergibt, kann zusätzlich eine Rückenstütze 41 vorgesehen sein, die zwischen dem Fahrzeugdach 11 und der Seitenstruktur 15 des Fahrzeuges aufgespannt ist. Bei dem dargestellten Ausführungsbeispiel ist die Rückenstütze 41 an ihrem oberen Ende über entsprechend lösbare Befestigungen an dem Fahrzeugdach angeschlagen, so dass die Rückstütze 41 vom Fahrzeugdach 11 lösbar ist und nach unten zum Sitzteil 22 hin fällt, so dass die Oberfläche 14 des Radkastens 13 freigegeben ist, auf der gegebenenfalls Ausrüstungsgegenstände abgelegt sind. Das Entfernen der Rückenstütze 41 kann dadurch unterstützt sein, dass elastische Bänder längs der Rückenstütze bis zu den oberen Befestigungen verlaufen, die bei Lösen der Rückenstütze 41 vom Fahrzeugdach 11 das Absinken der Rückenstütze 41 unterstützen. Wie nicht weiter dargestellt, kann auch vorgesehen sein, die Rückenstütze in entsprechenden Aufbewahrungskästen aufzubewahren und sie daraus auszuziehen und im Fahrzeug festzulegen.

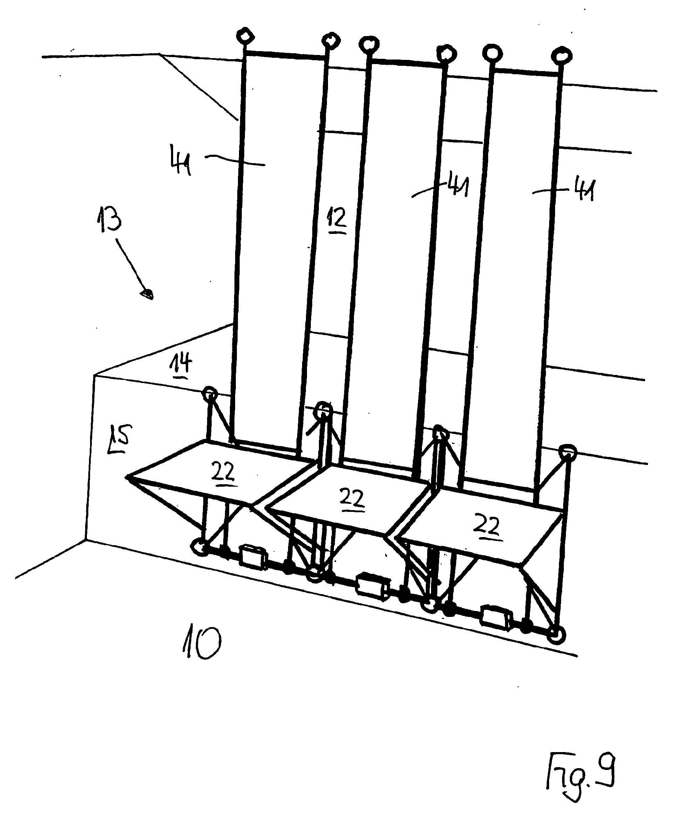

Aus den Figuren 8 und 9 ist schließlich ein in Gebrauch befindlicher Sicherheitssitz gemäß Figuren 1 bis 7 mit einem darauf sitzenden Fahrzeuginsassen 42 erkennbar, ferner in Figur 9 die Anordnung von drei nebeneinander befindlichen Sicherheitssitzen, wodurch erkennbar wird, dass die Insassen jeweils beim Aussteigen aus dem Fahrzeug seitlich über die Reihe von Sicherheitssitzen hinwegrutschen können. Wie nicht weiter dargestellt kann dabei vorgesehen sein, dass die parallel zueinander liegenden seitlichen Profilteile 25 der zugeordneten Rahmen 24 Bohrungen zur Aufnahme entsprechender Schraubverbindungen zur Verbindung der jeweils benachbarten Rahmen 24 aufweisen können.

## Patentansprüche

1. Sicherheitssitz für Land-, Luft- und Seefahrzeuge mit einem Sitzteil (22), welches an einem fahrzeugseitig befestigten und wenigstens zwei vertikale Haltegurte (18) aufweisenden Gurtgerüst festgelegt ist, wobei das Sitzteil (22) aus einem Rohrrahmen (24) mit einer davon getragenen textilen Sitzfläche (45) besteht, **dadurch gekennzeichnet, dass** ein einen auf dem Sitzteil (22) sitzenden Insassen (42) sicherndes Schultergurtzeug (32) vorgesehen ist, welches aus jeweils einem im Rückenbereich des Insassen (42) zwischen einer lösbaren Befestigung (35) am Dachbereich (11) des Fahrzeuges und dem rückwärtigen Endes (46) des Sitzteils (22) vertikal verlaufenden Gurtabschnitt (23) besteht, wobei die beiden Gurtabschnitte (33) an dem Sitzteil (22) umgelenkt und in einem kreuzweisen Verlauf die Sitzfläche (45) des Sitzteils (22) untergreifend bis zu einer im Bereich der Vorderkante des Sitzteils (22) angeordneten Befestigung geführt sind und wobei das Schultergurtzeug (32) ferner an den vertikalen Gurtabschnitten (33) gehalterte, über die Schultern des Insassen (42) bis zu einer im Bereich der Vorderkante des Sitzteils (22) angeordneten lösbaren Befestigung (38) geführte Schultergurte (36) aufweist, die über eine im Brustbereich des Insassen (42) angeordnete lösbare Querverbindung (39, 40) miteinander verbindbar sind.

2. Sicherheitssitz nach Anspruch 1, **dadurch gekennzeichnet , dass** die Halterung der Schultergurte (36) an den vertikalen Gurtbandabschnitten (33) des Schultergurtzeuges (32) verschiebbar eingerichtet ist.

3. Sicherheitssitz nach Anspruch 1 oder 2, **dadurch gekennzeichnet, dass** die die Schultergurte (36) verbindende Querverbindung (39, 40) an den Schultergurten (36) verschiebbar geführt ist.

4. Sicherheitssitz nach einem der Ansprüche 1 bis 3, **dadurch gekennzeichnet, dass** die lösbare Querverbindung als Gurtschloss (40) mit einer in einen Schlosskörper einsteckbaren und darin lösbar verriegelbaren Schlosszunge (39) ausgebildet ist.

5. Sicherheitssitz nach einem der Ansprüche 1 bis 4, **dadurch gekennzeichnet, dass** die Befestigung der vertikalen Gurtabschnitte (33) mit dem Dachbereich (11) als Schnelltrennkupplung (35) ausgebildet ist.

6. Sicherheitssitz nach einem der Ansprüche 1 bis 5, **dadurch gekennzeichnet, dass** die Befestigung der Schultergurte (36) an dem Sitzteil (32) im Bereich von dessen Vorderkante als Schnelltrennkupplung (38) ausgebildet ist.

7. Sicherheitssitz nach Anspruch 6, **dadurch gekennzeichnet, dass** die Schnelltrennkupplung (38) gleichzeitig zur Befestigung des Endes des jeweils unter dem Sitzteil verlaufenden Gurtabschnitts eingerichtet ist.

8. Sicherheitssitz nach einem der Ansprüche 1 bis 7, **dadurch gekennzeichnet, dass** das sich mit seinem rückwärtigen Ende (46) gegen die vertikalen Haltegurte (18) des Gurtgerüstes (16) abstützende Sitzteil (22) zwei seitlich daran angeordnete, mit dem Sitzteil (22) verbundene Stützen (23) aufweist, die sich von ihrer von dem rückwärtigen Ende (46) des Sitzteils beabstandeten Befestigung (26) an dem Sitzteil (22) in einem schrägen Verlauf unterhalb des Sitzteils (22) zu den vertikalen Haltegurten (18) des Gurtgerüsts (16) erstrecken und mit ihren freien Enden in an in den vertikalen Haltegurten (18) ausgebildeten Schlaufen (27) eingehängt sind, und dass unterhalb des Sitzteils (22) zwei längs der Seitenränder des Sitzteils (22) von einer vorderen Befestigung (29) am Sitzteil (22) bis zu einer Verbindung (30) mit den vertikalen Haltegurten (18) verlaufende Spanngurte (28) vorgesehen sind, deren Länge kürzer bemessen ist als der Abstand zwischen ihren vorderen Befestigungen (29) am Sitzteil (22) und dem sich gegen die vertikalen Haltegurte (18) abstützenden rückwärtigen Ende (46) des Sitzteils (22).

9. Sicherheitssitz nach Anspruch 8, **dadurch gekennzeichnet, dass** das Gurtgerüst (16) aus einem durch vier in einem Rechteck angeordneten, an einer Seitenstruktur (15) des Fahrzeuges befestigten Verankerungen (17) geführten Gurtband besteht, wobei das Gurtband mit den beiden vertikalen Haltegurten (18) und mit zwei diagonal verlaufenden Kreuzgurten (19) sowie mit einem horizontalen Quergurt (20) ausgebildet ist und in den horizontalen Quergurt (20) eine Spannvorrichtung (21) für das Gurtgerüst (16) eingeschaltet ist.

10. Sicherheitssitz nach Anspruch 8 oder 9, **dadurch gekennzeichnet, dass** die beiden oberen fahrzeugfesten Verankerungen (17) oberhalb des Sitzteils (22) an der Seitenstruktur (15) des Fahrzeuges befestigt sind.

11. Sicherheitssitz nach Anspruch 9 oder 10, **dadurch gekennzeichnet, dass** die fahrzeugfesten Verankerungen (17) als Ringschrauben ausgebildet sind, in die das Gurtband führend aufnehmende Karabinerhaken einklinkbar sind.

12. Sicherheitssitz nach einem der Ansprüche 8 bis 11, **dadurch gekennzeichnet, dass** die Verbindungen der Spanngurte (28) mit den vertikalen Haltegurten (18) des Gurtgerüsts (16) als die Haltegurte (18) umschließende, an den Spanngurten (28) befestigte öffenbare D-Ringe (30) ausgebildet sind.

13. Sicherheitssitz nach einem der Ansprüche 8 bis 12, **dadurch gekennzeichnet, dass** die Spanngurte (28) längs der seitlichen Profile (25) des Rahmens (24) des Sitzteils (22) verlaufen.

14. Sicherheitssitz nach einem der Ansprüche 8 bis 13, **dadurch gekennzeichnet, dass** die zwischen den Stützen (23) und dem Sitzteil (22) bestehenden Befestigungen als Gelenkverbindungen (26) ausgebildet sind derart, dass das Sitzteil (22) durch Anheben seines rückwärtigen Endes (46) um die Gelenkverbindungen (26) hochklappbar ist.

15. Sicherheitssitz nach Anspruch 14, **dadurch gekennzeichnet, dass** an dem Sitzteil (22) ein elastisches Zugmittel (31) angeschlagen und mit seinem freien Ende im Dachbereich (11) des Fahrzeuges befestigt ist derart, dass das Sitzteil (22) durch die von dem Zugmittel (31) ausgeübte Spannung in der hochgeklappten Stellung gehalten und entgegen der Vorspannung in die Sitzposition zu bringen ist.

16. Sicherheitssitz nach einem der Ansprüche 1 bis 15, **dadurch gekennzeichnet, dass** im rückwärtigen Bereich (46) des Sitzteils (22) eine zwischen dem Dachbereich (11) und dem Sitzteil (22) aufgespannte Rückenstütze (41) vorgesehen ist.

17. Sicherheitssitz nach Anspruch 16, **dadurch gekennzeichnet, dass** die Rückenstütze (41) am Dachbereich (11) des Fahrzeuges über lösbare Befestigungen gehaltert ist.

18. Sicherheitssitz nach Anspruch 16 oder 17, **dadurch gekennzeichnet, dass** an dem lösbaren Ende der Rückenstütze (41) elastische Zugmittel zur Verbringung der Rückenstütze (41) in einen Staubereich befestigt sind.

19. Sicherheitssitz nach Anspruch 16, **dadurch gekennzeichnet, dass** die Rückenstütze (41) selbsttätig in einen am Fahrzeug befestigten Aufbewahrungskasten einziehbar und das freie Ende der Rückenstütze (41) lösbar an dem Fahrzeugdach (11) beziehungsweise dem Sitzteil (22) befestigbar ist.

20. Sicherheitssitz nach einem der Ansprüche 16 bis 19, **dadurch gekennzeichnet, dass** die Rückenstütze (41) mit einem Kopfstützenbereich versehen ist.

21. Sicherheitssitz nach einem der Ansprüche 1 bis 20, **dadurch gekennzeichnet, dass** der Rahmen (24) des Sitzteils (22) wenigstens eine in seinen seitlichen Profilteilen (25) angebrachte Bohrung zur Aufnahme einer mehrere Sicherheitssitze zu einer Reihe verbindenden Schraubverbindung aufweist.

## Claims

1. Safety seat for land vehicles, aircraft and watercraft, having a seat portion (22) that is secured to a strap framework that is secured to a vehicle and has at least two vertical support straps (18) , whereby the seat portion (22) is comprised of a tubular frame (24) having a textile sitting surface (45) carried thereby, **characterized in that** a shoulder harness (32) is provided for securing an occupant (42) that is seated on the seat portion (22), and is comprised of a strap portion (23) that in the back region of the occupant (42) extend vertically between a releasable securement (35) on the roof portion (11) of the vehicle and the rear end (46) of the seat portion (22), whereby the two strap portions (33) are deflected at the seat portion (22) and, in a crossed manner beneath the sitting surface (45) of the seat portion (22), are guided to a securement disposed in the vicinity of the front edge of the seat portion (22), and whereby the shoulder harness (32) is furthermore provided with shoulder straps (36) that are held on the vertical strap portions (33), are guided over the shoulders of the occupant (42) to a releasable securement (38) disposed in the vicinity of the front edge of the seat portion (22), and are interconnected by means of a releasable cross connection (39, 40) disposed in the chest area of the occupant (42).

2. Safety seat according to claim 1, **characterized in that** the holding of the shoulder straps (36) on the vertical strap portions (33) of the shoulder harness (32) has a displaceable configuration.

3. Safety seat according to claim 1 or 2, **characterized in that** the cross connection (39, 40) that connects the shoulder straps (36) is displaceably guided on the shoulder straps (36).

4. Safety seat according to claims 1 to 3, **characterized in that** the releasable cross connection is embodied as a belt buckle (40) having a buckle tongue (39) that is insertable into a lock body and is detachably latched therein.

5. Safety seat according to claim 1 to 4, **characterized in that** the securement of the vertical strap portions (33) with the roof portion (11) is embodied as a rapid disconnect coupling (35).

6. Safety seat according to claim 1 to 5, **characterized in that** the securement of the shoulder straps (36) on the seat portion (22) in the region of the front edge thereof is embodied as a rapid disconnect coupling (38).

7. Safety seat according to claim 6, **characterized in that** the rapid disconnect coupling (38) is simultaneously configured for the securement of the end of the strap portion that respectively extends under the seat portion.

8. Safety seat according to one of the claims 1 to 7, **characterized in that** the seat portion (22), the rear end (46) of which is supported against the vertical support straps (18) of the strap framework (16), is provided with two supports (23) that are disposed on the side of the seat portion and are connected with the seat portion (22), wherein the supports extend from their securement (26) on the seat portion (22), which is spaced from the rear end (46) of the seat portion, in an inclined path beneath the seat portion (22) to the vertical support straps (18) of the strap framework (16), and with their free ends are suspended in loops (27) that are formed on the vertical support straps (18), and **in that** beneath the seat portion (22), two tensioning straps (28) are provided that extend along the side edges of the seat portion (22) from a front securement (29) on the seat portion (22) to a connection (30) with the vertical support straps (18), wherein the length of the tensioning straps is less than the distance between their front securements (29) to the seat portion (22) and the rear end (46) of the seat portion (22) that is supported against the vertical support straps (18).

9. Safety seat according to claim 9, **characterized in that** the strap framework (16) is comprised of a belt strap that is guided through four anchoring devices (17) that are arranged in a rectangle and are secured to a side structure (15) of the vehicle, whereby the belt strap is configured with the two support straps (18) and two diagonally extending crossed straps (19) as well as with a horizontal cross strap (20), and a tensioning device (21) for the strap framework (16) is inserted into the horizontal cross strap (20).

10. Safety seat according to claim 8 or 9, **characterized in that** the two upper anchoring devices (17) that are secured to the vehicle are secured to the side structure (15) above the seat portion (22).

11. Safety seat according to claim 9 or 10, **characterized in that** the anchoring devices (17) that are secured to the vehicle are embodied as eyebolts into which can be latched carabiner hooks that receive the belt strap in a guided manner.

12. Safety seat according to one of the claims 8 to 11, **characterized in that** the connections of the tensioning straps (28) with the vertical support straps (18) of the strap framework (16) are embodied as D-rings (30) that can be opened, surround the support straps (18), and are secured to the tensioning straps (28).

13. Safety seat according to one of the claims 8 to 12, **characterized in that** the tensioning straps (28) extend along the lateral profiled parts (25) of the frame (24) of the seat portion (22).

14. Safety seat according to one of the claims 8 to 13, **characterized in that** the securements provided between the supports (23) and the seat portion (22) are configured as hinged connections (26) in such a way that the seat portion (22) can be folded up by raising its rear end (46) about the hinged connections (26).

15. Safety seat according to claim 14 , **characterized in that** an elastic puling means (31) is attached to the seat portion (22), and its free end is secured in the roof portion (11) of the vehicle in such a way that by means of the tension exerted by the pulling means (31), the seat portion (22) is held in the folded-up position and is to be brought into the sitting position counter to the pretensioning.

16. Safety seat according to one of the claims 1 to 15, **characterized in that** in the rear region (46) of the seat portion (22), a back support (41) is provided and is suspended between the roof portion (11) and the seat portion (22).

17. Safety seat according to claim 16, **characterized in that** the back support (41) is held on the roof portion (11) of the vehicle via detachable securements.

18. Safety seat according to one of the claims 16 or 17, **characterized in that** elastic pulling means are secured on the detachable end of the back support (41) for bringing the back support (41) into a storage area.

19. Safety seat according to claim 16, **characterized in that** the back support (41) can be automatically pulled into a storage box secured to the vehicle, and the free end of the back support (41) can be detachably secured to the roof portion (11) or the seat portion (22).

20. Safety seat according to one of the claims 16 to 19, **characterized in that** the back support (41) is provided with a head support region.

21. Safety seat according to one of the claims 1 to 20, **characterized in that** the frame (24) of the seat portion (22) has at least one bore provided in its lateral profiled parts (25) for receiving a screw connection for connecting a plurality of safety seats to form a row.

## Revendications

1. Siège de sécurité pour des véhicules terrestres, aériens et maritimes comportant une assise (22), laquelle est fixée au niveau d'un système de ceinturage fixé côté véhicule et présentant au moins deux ceintures de maintien (18) verticales, l'assise (22) se composant d'un cadre tubulaire (24) présentant une surface de siège (45) textile supportée par ce dernier, **caractérisé en ce qu'**une ceinture épaule (32) sécurisant un passager (42) assis sur l'assise (22) est prévue, laquelle se compose de respectivement une section de ceinture (23) s'étendant de manière verticale dans le dos du passager (42) entre une fixation (35) amovible au niveau de la zone de toit (11) du véhicule et l'extrémité (46) arrière de l'assise (22), les deux sections de ceinture (33) étant guidées de manière articulée au niveau de l'assise (22) et venant en prise par le bas dans un tracé en croix avec la surface de siège (45) de l'assise (22) jusqu'à une fixation disposée dans la zone de l'arête avant de l'assise (22) et le harnais épaule (32) présentant en outre des ceintures épaule (36) calées au niveau des sections de ceinture (33) verticales, guidées jusqu'à une fixation (38) amovible disposée dans la zone de l'arête avant de l'assise (22) en passant par les épaules du passager (42), lesquelles ceintures épaule peuvent être raccordées entre elles par l'intermédiaire d'un raccord transversal (39, 40) amovible disposé dans la zone de la poitrine du passager (42).

2. Siège de sécurité selon la revendication 1, **caractérisé en ce que** le support de fixation des ceintures épaule (36) est monté de manière à pouvoir être déplacé au niveau des sections de sangle (33) verticales du harnais épaule (32).

3. Siège de sécurité selon la revendication 1 ou 2, **caractérisé en ce que** le raccord transversal (39, 40) reliant les ceintures épaule (36) est guidé de manière à pouvoir être déplacé au niveau des ceintures épaule (36).

4. Siège de sécurité selon l'une quelconque des revendications 1 à 3, **caractérisé en ce que** le raccord transversal amovible est réalisé sous la forme d'un brin boucle (40) présentant une languette de fermeture (39) pouvant être enfichée dans le corps de fermeture et y être verrouillée de manière amovible.

5. Siège de sécurité selon l'une quelconque des revendications 1 à 4, **caractérisé en ce que** la fixation des sections de ceinture (33) verticales avec la zone de toit (11) est réalisée sous la forme d'un raccord rapide (35).

6. Siège de sécurité selon l'une quelconque des revendications 1 à 5, **caractérisé en ce que** la fixation des ceintures épaule (36) au niveau de l'assise (32) est réalisée dans la zone de l'arête avant de l'assise sous la forme d'un raccord rapide (38).

7. Siège de sécurité selon la revendication 6, **caractérisé en ce que** le raccord rapide (38) est monté également pour la fixation de l'extrémité de la section de ceinture s'étendant respectivement sous l'assise.

8. Siège de sécurité selon l'une quelconque des revendications 1 à 7, **caractérisé en ce que** l'assise (22) s'appuyant avec son extrémité arrière (46) contre les ceintures de maintien (18) verticales du système de ceinturage (16) présente deux montants (23) disposés sur ses côtés, reliés à l'assise (22), lesquels montants s'étendent depuis leur fixation (26) espacée de l'extrémité arrière (46) de l'assise au niveau de l'assise (22) dans un tracé oblique sous l'assise (22) en direction des ceintures de maintien (18) verticales du système de ceinturage (16) et sont accrochés par leurs extrémités libres au niveau des ganses (27) réalisées dans les ceintures de maintien (18) verticales, et **en ce que** sont prévues sous l'assise (22) deux ceintures de serrage (28) s'étendant le long des bords latéraux de l'assise (22) depuis une fixation (29) avant au niveau de l'assise (22) jusqu'à un raccord (30) avec les ceintures de maintien (18) verticales, ceintures de serrage dont la longueur est dimensionnée de manière plus courte que la distance entre les fixations (29) avant au niveau de l'assise (22) et l'extrémité (46) arrière de l'assise (22) s'appuyant contre les ceintures de maintien (18) verticales.

9. Siège de sécurité selon la revendication 8, **caractérisé en ce que** le système de ceinturage (16) se compose d'une sangle guidée à travers quatre ancrages (17) disposés en un rectangle, fixés à une structure latérale (15) du véhicule, la sangle étant réalisée avec les deux ceintures de maintien (18) verticales et avec deux ceintures croisées (19) s'étendant de manière diagonale ainsi qu'avec une ceinture transversale (20) horizontale et un dispositif de serrage (21) pour le système de ceinturage (16) étant monté dans la ceinture transversale (20) horizontale.

10. Siège de sécurité selon la revendication 8 ou 9, **caractérisé en ce que** les deux ancrages (17) supérieurs fixés fixement au véhicule sont fixés au-dessus de l'assise (22) au niveau de la structure latérale (15) du véhicule.

11. Siège de sécurité selon la revendication 9 ou 10, **caractérisé en ce que** les deux ancrages (17) fixés de manière fixe au véhicule sont réalisés sous la forme de vis à oeil avec embase, dans lesquelles des crochets à mousqueton recevant la sangle de manière directrice peuvent être encliquetés.

12. Siège de sécurité selon l'une quelconque des revendications 8 à 11, **caractérisé en ce que** les raccords des ceintures de serrage (28) avec les ceintures de maintien (18) verticales du système de ceinturage (16) sont réalisés sous la forme d'anneaux en D (30) ouvrables entourant les ceintures de maintien (18), fixés au niveau des ceintures de serrage (28).

13. Siège de sécurité selon l'une quelconque des revendications 8 à 12, **caractérisé en ce que** les ceintures de serrage (28) s'étendent le long des profilés latéraux (25) du cadre (24) de l'assise (22).

14. Siège de sécurité selon l'une quelconque des revendications 8 à 13, **caractérisé en ce que** les fixations se trouvant entre les montants (23) et l'assise (22) sont réalisées sous la forme de raccords articulés (26) de telle sorte que l'assise (22) peut être repliée au niveau des raccords articulés (26) en soulevant son extrémité arrière (46).

15. Siège de sécurité selon la revendication 14, **caractérisé en ce qu'**un moyen de traction élastique (31 ) est attaché au niveau de l'assise (22) et est fixé avec son extrémité libre dans la zone de toit (11) du véhicule de telle sorte que l'assise (22) est maintenue par la tension exercée par le moyen de traction (31) dans la position relevée et doit être ramenée contre la précontrainte dans la position assise.

16. Siège de sécurité selon l'une quelconque des revendications 1 à 15, **caractérisé en ce qu'**est prévu dans la zone arrière (46) de l'assise (22) un dossier (41) tendu entre la zone de toit (11) et l'assise (22).

17. Siège de sécurité selon la revendication 16, **caractérisé en ce que** le dossier (41) est maintenu au niveau de la zone de toit (11) du véhicule par l'intermédiaire de fixations amovibles.

18. Siège de sécurité selon la revendication 16 ou 17, **caractérisé en ce que** des moyens de traction élastiques sont fixés au niveau de l'extrémité amovible du dossier (41) pour passer le dossier (41) dans une zone de retenue.

19. Siège de sécurité selon la revendication 16, **caractérisé en ce que** le dossier (41) peut être introduit de manière automatique dans une boîte de stockage fixée au niveau du véhicule, et **en ce que** l'extrémité libre du dossier (41) peut être fixée de manière amovible au niveau du toit du véhicule (11) et/ou de l'assise (22).

20. Siège de sécurité selon l'une quelconque des revendications 16 à 19, **caractérisé en ce que** le dossier (41) est pourvu d'une zone appui-tête.

21. Siège de sécurité selon l'une quelconque des revendications 1 à 20, **caractérisé en ce que** le cadre (24) de l'assise (22) présente au moins un alésage réalisé dans ses parties de profilé latérales (25) servant à recevoir un écrou-raccord reliant plusieurs sièges de sécurité en une rangée.
